**Europäisches Patentamt**

**European Patent Office**

**Office européen des brevets**

(19)

(11) Veröffentlichungsnummer: **0 329 068 B1**

(12) # EUROPÄISCHE PATENTSCHRIFT

(45) Veröffentlichungstag der Patentschrift :
27.12.91 Patentblatt 91/52

(51) Int. Cl.⁵ : **B23B 49/02**

(21) Anmeldenummer : 89102486.1

(22) Anmeldetag : 14.02.89

(54) **Bohrerführungseinrichtung zum Herstellen von Bohrungen, z.B. in Wangen und Handläufen von Treppen.**

(30) Priorität : 16.02.88 DE 3804771
23.01.89 DE 3901821

(43) Veröffentlichungstag der Anmeldung :
23.08.89 Patentblatt 89/34

(45) Bekanntmachung des Hinweises auf die
Patenterteilung :
27.12.91 Patentblatt 91/52

(84) Benannte Vertragsstaaten :
AT BE CH DE ES FR GB GR IT LI LU NL SE

(56) Entgegenhaltungen :
DE-A- 3 508 055
US-A- 3 062 076
US-A- 3 086 408
US-A- 3 626 513

(73) Patentinhaber : **Schad, Anton**
**Am Wirtsfeld 36**
**W-7971 Aitrach (DE)**

(72) Erfinder : **Schad, Anton**
**Am Wirtsfeld 36**
**W-7971 Aitrach (DE)**

(74) Vertreter : **Pfister, Helmut, Dipl.-Ing.**
**Buxacher Strasse 9**
**W-8940 Memmingen/Bayern (DE)**

## Beschreibung

Die Erfindung betrifft eine Bohrerführungseinrichtung nach dem Oberbegriff des Anspruches 1.

Das Herstellen von Bohrungslöchern in Werkstückflächen in spitzem Winkel zur Außenfläche der Werkstücke, beispielsweise zum Einsetzen von gedrechselten Staketen in schrägverlaufende Wangen und Handläufen von Treppen, ist schwierig. Einerseits neigt das Bohrwerkzeug wegen des schrägen Ansatzes dazu von der Ansatzstelle wegzuwandern, andererseits ist es schwierig, eine bestimmte Bohrrichtung exakt einzuhalten.

Insbesondere zu diesem Zweck sind Bohrerführungseinrichtungen vorgeschlagen worden, beispielsweise in der DE-OS 3508055. Die bekannten Vorrichtungen sind zwar in der Lage, sicherzustellen, daß der Bohrer an der vorgesehenen Stelle in der vorgesehenen Richtung in das Werkstück eindringt. Es ist jedoch schwierig, die Vorrichtungen in der gewünschten Stellung am Werkstück festzulegen.

Es ist Aufgabe der Erfindung, eine Bohrerführungseinrichtung zu schaffen, mit der es möglich ist, ein punkt- und richtungsgenaues Bohren durchzuführen, insbesondere in schräg verlaufenden Wangen und Handläufen von Treppen. Dabei ist es ein weiteres Ziel der Erfindung, die Vorrichtung an Werkstücken in einfacher Weise zu befestigen.

Zur Lösung dieser Aufgabe wird eine Ausbildung gemäß der kennzeichnenden Merkmale des Anspruches 1 vorgeschlagen.

Da die Achse der Bohrerführungshülse parallel zu einer Kante der Halterlasche verläuft, ist es leicht möglich, die Bohrerführungseinrichtung gemäß der Erfindung derart an der Außenfläche, beispielsweise einer Wange, anzuordnen, daß eine Ausrichtung der Bohrerführungseinrichtung in der Längsrichtung der Wange einwandfrei möglich ist. Für die Ausrichtung der Bohrerführungshülse senkrecht zur Wangenfläche dient dann die Schraubspindel und der Führungsstab, so daß die Mittelachse der Führungshülse und damit die Mittelachse des Bohrers exakt über die Mittelachse der Bohrung gebracht werden kann.

Die Unteransprüche kennzeichnen weitere vorteilhafte Ausgestaltungen der Erfindung. Diese und weitere Verbesserungen sind in den Zeichnungen schematisch anhand einiger Ausführungsbeispiele dargestellt. Es zeigen :

Fig. 1    eine Vorderansicht der Bohrerführungseinrichtung gemäß der Erfindung,
Fig. 2    eine Seitenansicht des Ausführungsbeispiels nach der Fig. 1,
Fig. 3    einen Schnitt durch die Darstellungen der Fig. 1 und 2 gemäß der Schnittlinie III-III,
Fig. 4    eine Vorderansicht eines abgewandelten Ausführungsbeispiels,
Fig. 5    eine Seitenansicht zur Darstellung der Fig. 4,
Fig. 6    einen Schnitt durch die Darstellung der Fig. 4 und 5 entsprechend den Schnittlinien VI-VI, und
Fig. 7    eine Seitenansicht einer Einzelheit der Erfindung.

Die erfindungsgemäße Bohrerführungseinrichtung besteht im wesentlichen aus der Halterlasche 6 und der Bohrerführungshülse 8. Diese beiden Teile sind mittels der Schraubspindel 3 miteinander verbunden, die einerseits die Halterlasche 6 durchdringt und andererseits in die Gewindemutter 11 eingedreht ist. Durch je eine Spannmutter 10 kann die Schraubspindel 3 an der Halterlasche 6 und an der Gewindemutter 11 fixiert werden. Bei fest angezogenen Spannmuttern 10 ergibt sich somit eine feste Einheit für die aus der Halterlasche 6 und der Bohrerführungshülse 8 bestehende Bohrerführungseinrichtung.

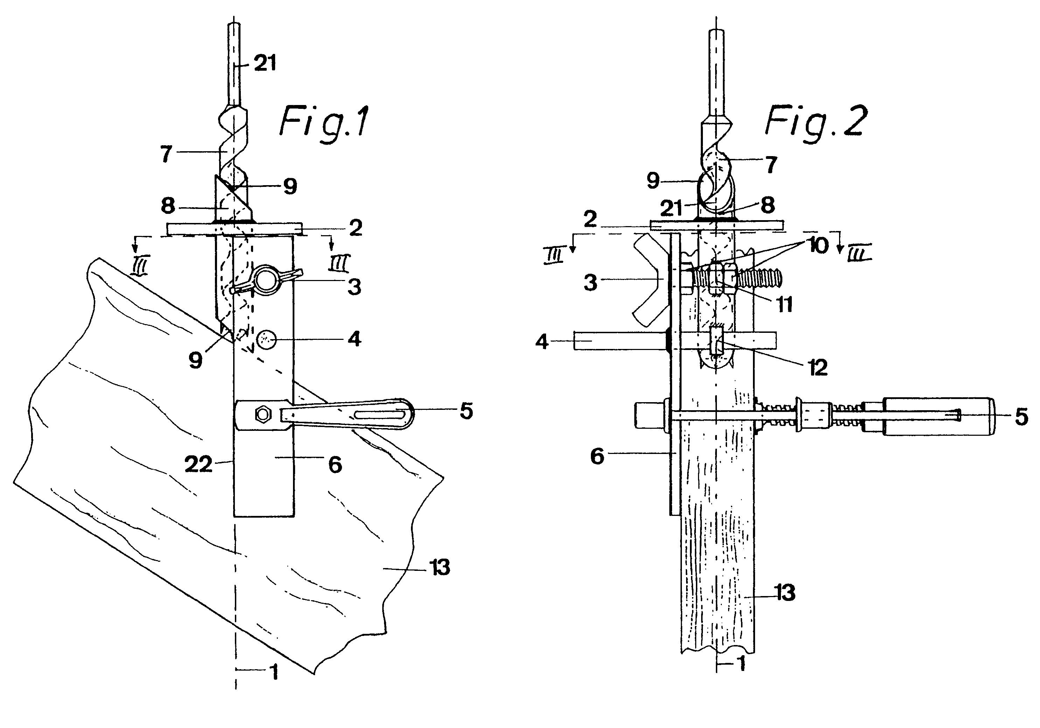

Durch diese feste Einheit wird ein genaues Bohren und zugleich die richtige Bohrrichtung erreicht. Die Kante 22 verläuft dabei exakt parallel zur Koordinationslinie 1, die die Mittelachse der anzubringenden Bohrung darstellt, die wiederum übereinstimmen soll mit der Achse 21 der Bohrerführungshülse 8. In den Darstellungen nach den Fig. 1, 4, 7 und 12 wird die Ausrichtung der Kante 22 zur Linie 1 deutlich. In diesen Ansichten decken sich die Kante 22 und die Linie 1.

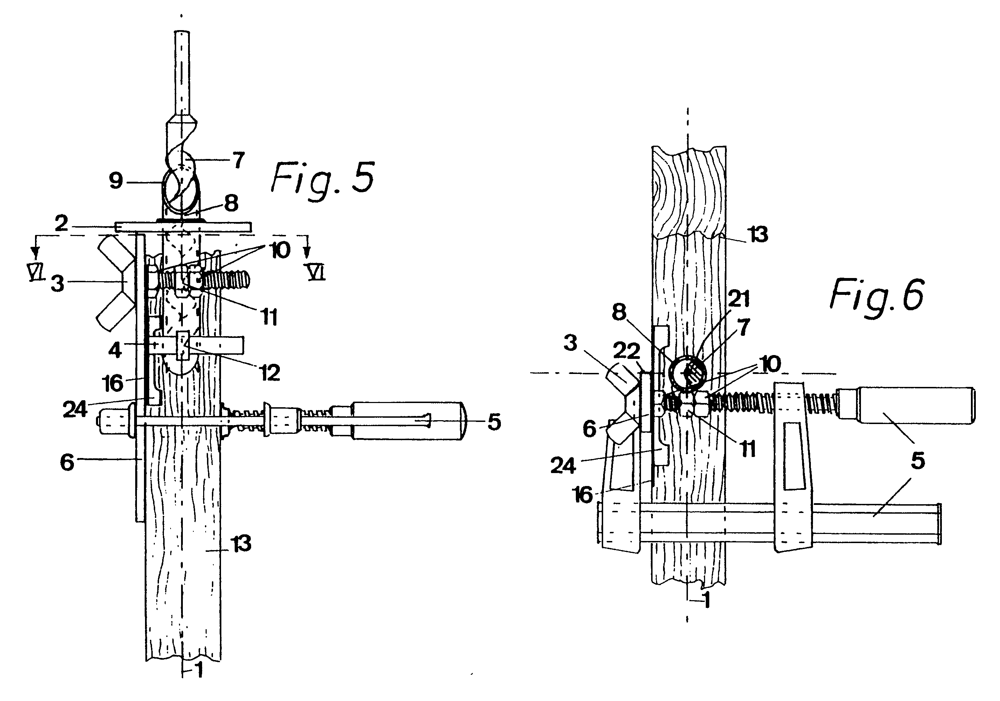

Der Führungsstab 4, der fest in der Halterlasche 6 angeordnet, beispielsweise eingeschweißt ist, durchdringt das Lager 12, das auf die Bohrerführungshülse 8 aufgesetzt ist. Dadurch wird eine Parallelverschiebung in der Bildebene, beispielsweise der Fig. 2, 5 und 8 möglich, die es erlaubt, die Mittelachse 21 des Bohrers auf den richtigen Abstand der Koordinationslinie 1 von der Außenfläche der Wange 13 einzustellen.

Mittels der Schraubzwinge 5 oder eines anderen geeigneten Spannmittels kann bei den Ausführungsbeispielen nach den Fig. 1 bis 6 die Bohrerführungseinrichtung derart an der Außenfläche der Wange 13 befestigt werden, daß die Kante 22 senkrecht verläuft.

In der Praxis verfährt man folgendermaßen.

Zuerst wird die Stakeneinteilung auf die Treppenwangen-Oberseite aufgerissen, wobei die Risse (Striche) rechtwinlig zur Wangenfläche über die ganze Breite durchgezogen werden. Diese Risse werden über die Kanten auf die Innen- oder Außenseiten der Treppenwange in der schrägen Richtung gezogen, so daß sie parallel zum senkrechten Schnitt der An- bzw. Austrittpfosten verlaufen, was mit einer sogenannten Schmiege leicht möglich ist. Diese Risse verlaufen also insbesondere lotrecht, d.h. parallel zur Linie 1. Die Bohrerführungseinrichtung wird nun so angesetzt, daß die Außenkante 22 der Halterlasche 6, 6 a genau bündig mit diesem Riß verläuft.

Damit die genaue Entfernung von der Außenseite der Wange bis zum Bohrlochmittelpunkt erreicht wird, müssen die Spannmuttern 10 gelöst werden, danach kann durch Drehen der Schraubspindel 3 die Bohrerführungshülse 8 in die gewünschte Stellung gebracht werden. Durch Anziehen der Spannmuttern 10 erreicht man eine Arretierung der Bohrerführungshülse 8. Nun kann mit dem Bohrvorgang begonnen werden.

Damit beim Einführen eines Holzbohrers 7 in die Bohrerführungshülse 8 die Vorschneider des Bohrers durch senkrechtes Aufsetzen nicht abgestumpft werden, weist die Bohrerführungshülse 8 schräge Enden 9 auf, wobei der Bohrer in waagrechter Richtung eingeführt wird, was das Einführen des Holzbohrers erleichtert und die Vorschneider schont.

Die Vorteile des unteren schrägen Endes 9 bestehen darin, daß man beim Aufsetzen der Bohrerspitze diese sieht und kontrollieren kann, ob die Einstellung stimmt. Ein weiterer Vorteil besteht darin, daß durch das untere schräge Ende 9 der Bohrerführungshülse 8 diese an der unteren Peripherie aufsitzt und somit ein Ausreißen der Holzfasern verhindert des weiteren können die Bohrspäne leichter austreten.

Um die gewünschte Bohrlochtiefe zu erreichen, besitzt die Bohrerführungshülse 8 die Aufsetzplatte 2, auf der der Einstellstab an der Bohrmaschine aufgesetzt wird.

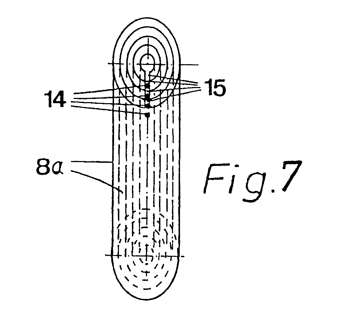

Die Bohrerführungshülsen gemäß Fig. 7 können angewandt werden, wenn der Bohrer 7 einen kleineren Durchmesser besitzt. In diesem Fall werden dann die entsprechenden ineinander gesteckten Bohrerführungshülsen 8 a in die äußere Bohrerführungshülse 8 eingesteckt. Die Halterbolzen 14 der einzelnen Bohrerführungshülsen wirken jeweils mit der Nut 15 der innen liegenden Führungshülse zusammen, so daß insgesamt eine Verdrehsicherung erhalten wird.

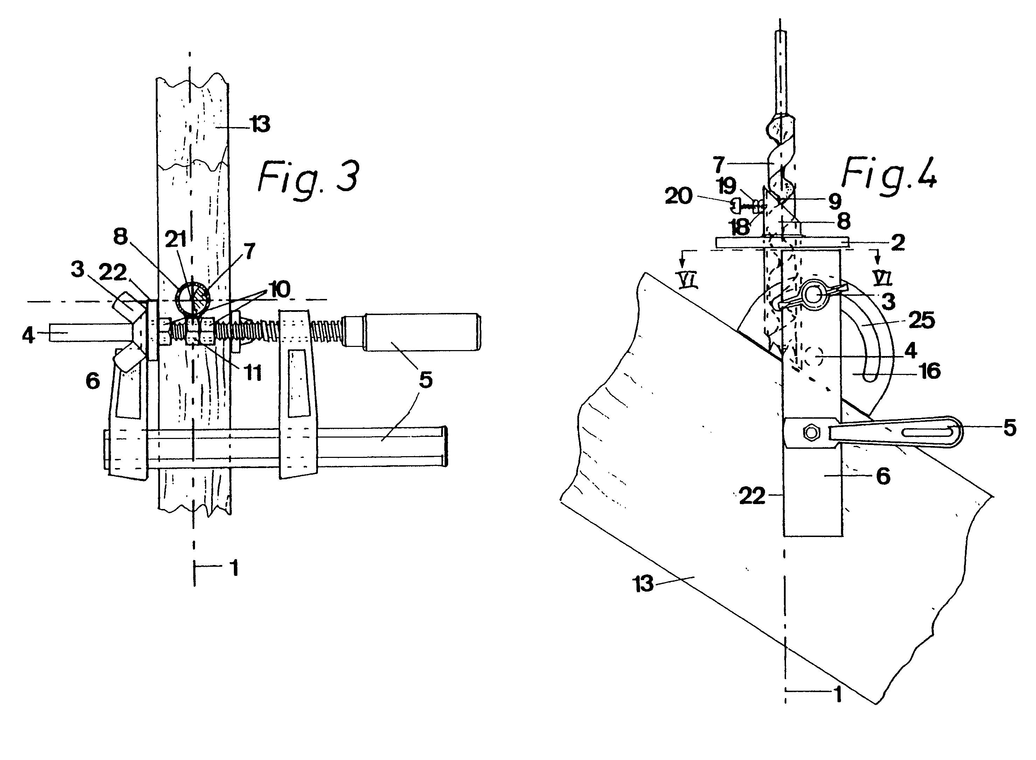

Bei dem Ausführungsbeispiel nach den Fig. 4, 5 und 6 sind die ineinander gesteckten Bohrerführungshülsen 8 a dadurch fest miteinander verbunden, daß die Halteschraube 20 in die Hülsenmutter 18 eingeschraubt, mittels der Kontermutter 19 gesichert ist und mit ihrem Ende auf die in diesem Fall nicht näher dargestellten Bohrerführungshülsen 8 a einwirkt. Die eingesteckten Bohrerführungshülsen besitzen jeweils eine zugeordnete Bohrung, so daß auf diese Weise eine Festlegung erfolgen kann. Das Eindrehen der Halteschraube 20 erfolgt soweit, daß das vordere Schraubenende nicht nach innen vorsteht.

Bei geraden Treppen ist der Neigungswinkel der Bohrlöcher in den Wangen und in den Handläufen stets gleich. Um diese gleichbleibende Neigung zu fixieren und sicherzustellen, dar genau parallele Bohrungen erhalten werden, ist beim Ausführungsbeispiel nach den Fig. 4, 5 und 6 zusätzlich zur Halterlasche 6 ein bogenförmiger Anschlag 16 vorgesehen. Dieser Anschlag 16 ist um den Führungsstab 4 verschwenkbar und wird durch die Schraubspindel 3 in der jeweiligen Lage fixiert. Diese Schraubspindel 3 durchdringt die halbkreisförmige Nut 25. Zur Auflage auf der Wange bzw. auf dem Handlauf ist am bogenförmigen Anschlag ein rechtwinkliger Flansch bzw. eine Abwinklung 24 vorgesehen.

Zum Einstellen der Bohrerführungseinrichtung für eine bestimmte Neigung werden die Spannmuttern 10 gelöst. Die Halterlasche 6, die als Koordinationshalterlasche dient, wird mit der parallel zur Achse der Bohrerführungshülse 8 verlaufenden Seitenlinie bzw. Kante 22 mit dem angerissenen senkrechten Riß an der Wange bündig angelegt. Zuerst wird die Schraubzwinge 5 angezogen und damit die Bohrerführungseinrichtung mit der Wange in der richtigen Neigung fixiert. Anschließend werden die Spannmuttern 10 angezogen, womit auch der bogenförmige Anschlag 16 die bestimmte Neigung beibehält, auf die er beim Anlegen der Halterlasche 6 eingestellt wurde.

## Patentansprüche

1. Bohrerführungseinrichtung zum Herstellen von Bohrungen in Werkstückflächen in schräg verlaufende Wangen und Handläufe von Treppen, mit einer Bohrerführungshülse (8) und einer Halterlasche (6), die von einer Schraubspindel (3) durchsetzt ist, wobei die Bohrerführungshülse mittels der Schraubspindel in einem beliebigen Abstand von der Halterlasche einstellbar und festlegbar ist, und mit Mitteln zur Festlegung der Halterlasche mit einer Anlageebene am Werkstück, dadurch gekennzeichnet, daß die Achse (21) der Bohrerführungshülse (8) parallel zu einer Kante (22) der Halterlasche (6, 6a) verläuft und die Achse (21) und die Kante (22) einer Ebene angehören, die rechtwinklig auf der Anlageebene aufsteht, und daß die Bohrerführungshülse (8) von einem an der Halterlasche (6, 6a) angeordneten Führungsstab (4) längsverschieblich in einer Richtung parallel zur Schraubspindel (3) geführt ist.

2. Bohrerführungseinrichtung nach Anspruch 1, dadurch gekennzeichnet, daß die Bohrerführungshülse (8) schräge Enden (9) aufweist.

3. Bohrerführungseinrichtung nach Anspruch 1, dadurch gekennzeichnet, daß sich an der Bohrerführungshülse (8) eine Aufsetzplatte (2) für einen Tiefen-Einstellstab der Bohrmaschine, eine von der Schraubspindel durchsetzte Gewindemutter (11) und ein vom Führungsstab (4) durchsetztes Lager (12) befindet.

4. Bohrerführungseinrichtung nach Anspruch 1, dadurch gekennzeichnet, daß in die Bohrerführungshülse (8) weitere Bohrerführungshülsen (8a) einsteckbar sind.

5. Bohrerführungseinrichtung nach Anspruch 1 und 4, dadurch gekennzeichnet, daß zwischen den ineinander steckenden Bohrerführungshülsen (8, 8a) Verdrehsicherungen, bestehend aus Nuten (15) und in die Nuten eingreifende Halterbolzen (14) vorgesehen sind.

6. Bohrerführungseinrichtung nach Anspruch 1, dadurch gekennzeichnet, daß die Halterlasche (6a) einen Winkel (23) aufweist zur Festlegung der Halterlasche auf der Bohrfläche.

7. Bohrerführungseinrichtung nach einem oder mehreren der vorhergehenden Ansprüche, dadurch gekennzeichnet, daß die Bohrerführungshülse (8) im oberen Teil, insbesondere im Bereich der Abschrägung eine eindrehbare und feststellbare Halteschraube (20) aufweist, der an den einsteckbaren Bohrerführungshülsen (8a) Bohrungen zugeordnet sind.

8. Bohrerführungseinrichtung nach einem oder mehreren der vorhergehenden Ansprüche, dadurch gekennzeichnet, daß an der Halterlasche (6) ein bogenförmiger Anschlag (16) gelagert ist, der gegenüber der Halterlasche (6) verdrehbar ist und der eine Abwinklung (24) zur Auflage am Werkstück aufweist.

9. Bohrerführungseinrichtung nach einem oder mehreren der vorhergehenden Ansprüche, dadurch gekennzeichnet, daß der bogenförmige Anschlag (16) eine halbkreisförmige Nut (25) mit dem Führungsstab (4) als Zentrum aufweist, wobei die Nut die Schraubspindel (3) aufnimmt.

10. Bohrerführungseinrichtung nach einem oder mehreren der vorhergehenden Ansprüche, dadurch gekennzeichnet, daß der bogenförmige Anschlag an seiner halbkreisförmigen Kontur eine Winkelgradeinteilung (17) aufweist, der eine Bezugsmarkierung an der Halterlasche (6) zugeordnet ist.

## Claims

1. Drilling jig for the production of drill holes in workpiece surfaces in angularly oriented banisters and handrails of stairs, with a drill guide sleeve (8) and a holding bracket (6) through which extends a screw rod (3), whereby said drill guide sleeve is adjustable and fixable at any distance from said holding bracket, and with means for fixing said holding bracket with a contact level on the workpiece, characterized in that the axis (21) of said drill guide sleeve (8) runs parallel to an edge (22) of said holding bracket (6, 6a) and the axis (21) and the edge (22) lie in one plane, which is perpendicular to said contact level, and that said drill guide sleeve (8) is guided longitudinally movable by a guiding rod (4) provided on said holding bracket (6, 6a) in a direction parallel to said screw rod (3).

2. Drilling jig according to claim 1, characterized in that said drill guid sleeve (8) presents bevelled ends (9).

3. Drilling jig according to claim 1, characterized in that on said drill guide sleeve (8) a support plate (2) for a depth adjustment rod of the drillling machine, a screw nut (11) trough which extends a screw rod and a bearing (12) through which extends said guiding rod (4) are provided.

4. Drilling jig according to claim 1, characterized in that in said drill guide sleeve (8) further drill guide sleeves (8a) can be inserted.

5. Drilling jig according to claim 1 and 4, characterized in that between the drill guide sleeves (8, 8a) fitted into each other anti-rotating devices are provided which comprise grooves (15) and retaining pins (14) engaging in said grooves.

6. Drilling jig according to claim 1, characterized in that said holding bracket (6a) shows an angle (23) for fixing said holding bracket on the drill surface.

7. Drilling jig according to one or more of the preceding claims, characterized in that said drill guide sleeve (8) shows on the upper part, particularly in the region of the bevelled surface, a screwable and fixable holding screw (20) to which correspond bores on the insertable drill guide sleeves (8a).

8. Drilling jig according to one or more of the preceding claims, characterized in that on said holding bracket (6) an arc-shaped stop (16) is supported, which is pivotable relative to said holding bracket (6) and shows an angle (24) for support on the wokpiece.

9. Drilling jig according to one or more of the preceding claims, characterized in that said arc-shaped stop (16) shows a semicircular groove (25), the center being said guiding rod (4), wherein said groove accomodates said screw rod (3).

10. Drilling jig according to one or more of the preceding claims, characterized in that said arc-shaped stop shows on its semicircular contour an angular graduation (17) to which corresponds a reference mark on said holding bracket (6).

**Revendications**

1. Gabarit de perçage pour la production de forures dans des surfaces de pièces sur des limons et des mains courantes inclinés d'escaliers, avec une douille guide-foret (8) et un plat-support (6) traversé par une tige filetée (3), la douille guide-foret étant réglable et immobilisable à une distance quelconque du plat-support au moyen de la tige filetée, et avec des moyens pour la fixation du plat-support avec une face d'appui sur la pièce, caractérisé par le fait que l'axe (21) de la douille guide-foret (8) est parallèle à une arête (22) du plat-support (6, 6a) et que l'axe (21) et l'arête (22) sont situés dans un même plan, perpendiculairè à la face d'appui, et par le fait que la douille guide-foret (8) est guidée longitudinalement coulissable dans un sens parallèle à la tige filetée (3) par une tige de guidage (4) disposée sur le plat-support (6, 6a).

2. Gabarit de perçage selon la revendication 1, caractérisé par le fait que la douille guide-foret (8) présente des extrémités (9) biaisées.

3. Gabarit de perçage selon la revendication 1, caractérisé par le fait qu'il se trouve à la douille guide-foret (8) une plaque rapportée d'appui (2) pour une tige de réglage en profondeur de la perceuse, un écrou fileté (11) traversée par la tige filetée et un palier (12) traversé par la tige de guidage (4).

4. Gabarit de perçage selon la revendication 1, caractérisé par le fait que des douilles guide-foret (8a) supplémentaires sont insérables dans la douille guide-foret (8).

5. Gabarit de perçage selon les revendications 1 et 4, caractérisé par le fait qu'il est prévu des dispositifs de blocage en rotation des douilles guide-foret (8, 8a) insérées les unes dans les autres, constitués par des rainures (15) et des goupilles de maintien (14) s'engageant dans les rainures.

6. Gabarit de perçage selon la revendication 1, caractérisé par le fait que le plat-support (6a) présente une équerre (23) pour caler le plat-support sur la surface de perçage.

7. Gabarit de perçage selon une ou plusieurs des revendications précédentes, caractérisé par le fait que la douille guide-foret (8) présente à la partie supérieure, en particulier à proximité de la surface biaisée, une vis de maintien (20) pouvant être vissée et bloquée, laquelle est prévue pour les trous dans les douilles guide-foret insérables (8a).

8. Gabarit de perçage selon une ou plusieurs des revendications précédentes, caractérisé par le fait qu'un secteur de forme arrondie (16) est monté sur le plat-support (6) pouvant pivoter par rapport au plat-support (6) et présentant un angle (24) pour l'application sur la pièce.

9. Gabarit de perçage selon une ou plusieurs des revendications précédentes, caractérisé par le fait que le secteur arrondi (16) présente une rainure semi-circulaire (25) ayant pour centre la tige de guidage (4), la tige filetée (3) passant par ladite rainure.

10. Gabarit de perçage selon une ou plusieurs des revendications précédentes, caractérisé par le fait que le secteur arrondi présente sur son contour semi-circulaire une graduation angulaire (17) auquel correspond un repère de référence sur le plat-support (6).

Fig.1

Fig.2

EP 0 329 068 B1

Fig. 4

Fig. 3

Fig. 5

Fig. 6

EP 0 329 068 B1

Fig.7